# FASCICULE DE BREVET EUROPEEN

(11) **EP 3 006 786 B1**
(45) Date de publication et mention de la délivrance du brevet: **14.06.2017**
(21) Numéro de dépôt: 15185797.6
(22) Date de dépôt: 18.09.2015
(51) Int. Cl.: F16H 63/30

(54) **DISPOSITIF DE COMMANDE INTERNE DE BOÎTE DE VITESSES AVEC AIDE AU PASSAGE INTÉGRÉ**
INTERNE GETRIEBE-STEUERVORRICHTUNG MIT INTEGRIERTER SCHALTUNTERSTÜTZUNG
INTERNAL GEAR BOX CONTROL DEVICE WITH INTEGRATED SHIFTING ASSISTANCE

(30) Priorité: 06.10.2014 FR 1459546
(43) Date de publication de la demande: 13.04.2016
(73) Titulaire: Renault S.A.S., 92100 Boulogne-Billancourt (FR)
(72) Inventeur: Gaillard, Fabien, 92500 RUEIL-MALMAISON (FR); Leleu, Mathieu, 78112 FOURQUEUX (FR)

(56) Documents cités:
- EP-A1- 1 329 651
- DE-A1- 10 232 873
- FR-A1- 2 988 800
- FR-A3- 2 956 178

## Description

La présente invention concerne la commande interne des vitesses dans une boîte de vitesses avec assistance au passage.

Plus précisément, elle a pour objet un dispositif de commande interne de boîte de vitesses comprenant une clé d'inter-verrouillage rotative apte à sélectionner l'une d'au moins deux lignes de vitesses en verrouillant simultanément les lignes non sélectionnées, et un axe de commande interne immobilisé en rotation vis-à-vis du carter de la boîte et entraîné en translation axiale sous le contrôle d'un organe externe de commande de passage pour engager des vitesses sur une ligne de vitesses sélectionnée en déplaçant un axe de fourchette vers une position de vitesse engagée.

Cette invention trouve une application privilégiée, mais non limitative, sur des boîtes de vitesses comportant des ensembles moyeu/baladeur qui réalisent le crabotage des pignons sur leur arbre (par exemple avec des crabots à front carré ou non), sans moyens de synchronisation mécanique, mais où l'égalisation de régime des pignons et des arbres de vitesses préalable à leur accouplement, peut être confiée à des machines électriques et à des moteurs thermiques.

Par la publication FR 2 988 800, on connaît un dispositif d'aide au crabotage, dans lequel un dispositif propulseur, composé principalement d'un ressort, est intercalé entre une fourchette solidaire de son axe, et un crabot.

Un tel dispositif est utilisable en plusieurs exemplaires dans des boîtes de vitesses comportant au moins deux dispositifs de « fourchette assistée », entraînant chacun un groupe baladeur/clabots, sous le contrôle d'un actionneur. Toutefois, l'augmentation du nombre de pièces de la boîte consacrées à l'aide au passage, a un impact négatif sur la masse totale de celle-ci et sur ses performances. On connaît également de EP 1 329 651 un dispositif de commande interne de boîte de vitesses présentant toutes les caractéristiques du préambule de la revendication 1. La présente invention vise à limiter la masse des éléments internes de la boîte mis en mouvement pour aider l'engagement des vitesses, tout en limitant les jeux de fonctionnement de la commande.

Dans ce but, elle propose d'introduire dans le dispositif de commande interne de la boîte, un chariot d'aide au passage supporté par l'axe de commande, et entraîné en translation par cet axe lors de l'engagement d'une vitesse tout en pouvant coulisser le long de celui-ci, et un ressort enroulé autour de l'axe, qui est comprimé par le déplacement du chariot en emmagasinant de l'énergie sur une première partie de sa course d'engagement de l'axe, et libère son énergie pour assister l'engagement de la vitesse sur une deuxième partie de celle-ci.

De préférence, le ressort est monté entre deux bagues qui coulissent le long de l'axe, sur une distance déterminée pour limiter le débattement axial du chariot.

La présente invention sera mieux comprise à la lecture de la description suivante d'un mode de réalisation non limitatif de celle-ci, en se reportant aux dessins annexés, sur lesquels :
- la figure 1 est une vue du dispositif proposé,
- la figure 2 est une vue d'ensemble du même dispositif avec ses moyens d'actionnement et les lignes de pignons commandés,
- la figure 3 montre son système d'arrêt en rotation de l'axe de passage,
- les figures 4 et 5 montrent les moyens de rappel en sélection du dispositif,
- les figures 6, 7, 8 et 9 décrivent le système de sélection et d'inter-verrouillage,
- les figures 10, 11, 12, 13, montrent d'autres aspects du même système,
- la figure 14 montre les interfaces avec le carter, et
- les figures 15, 16, 17, illustrent le principe d'assistance et d'aide au passage de vitesses.

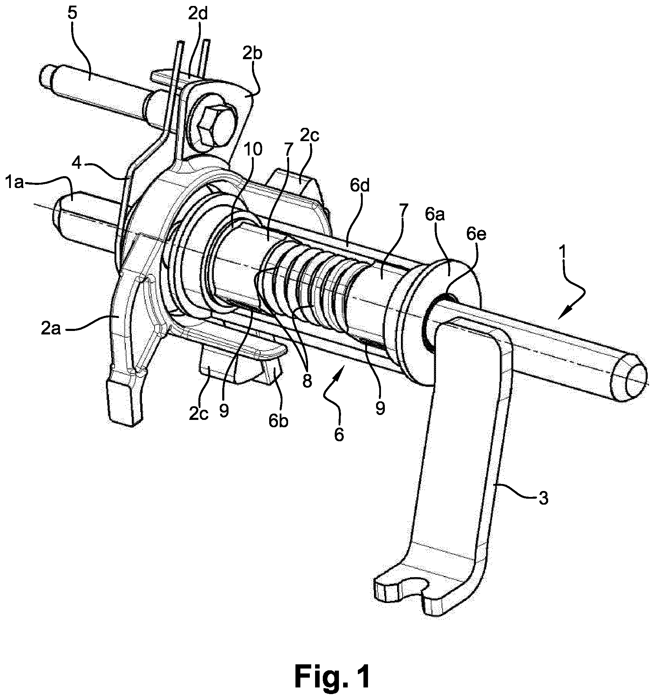

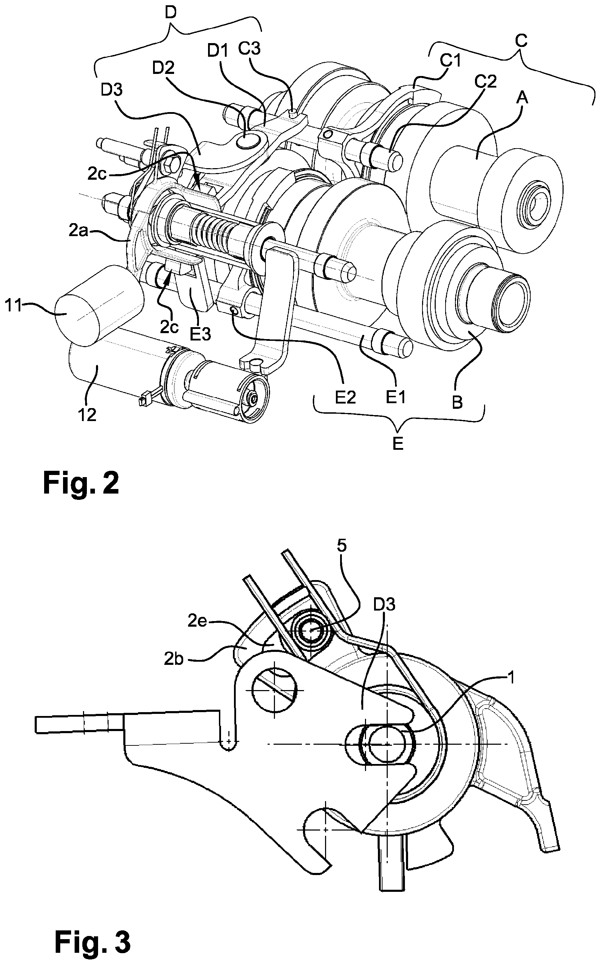

Le dispositif de commande illustré par la figure 1, comprend un axe de commande 1, entrainé en translation par un crabot 3, lui-même entraîné par un actionneur externe (voir figure 2). L'axe 1 est monté dans deux paliers, et coulisse dans le carter à ses deux extrémités. Il est bloqué en rotation à une de ses extrémités (à gauche sur la figure 1) par un méplat 1a, et par un élément extérieur de support D3 visible sur la figure 3.

Il comprend également une clé d'inter-verrouillage 2, composée d'un bras d'actionnement 2a, d'un secteur angulaire d'indexage 2b, de deux secteurs angulaires d'inter-verrouillage des vitesses 2c, et d'une patte de maintien 2d pour le rappel de l'ensemble dans sa position centrale de sélection. Les secteurs angulaires d'inter-verrouillage 2c sont agencés de manière à verrouiller les doigts des lignes de vitesses non sélectionnées. La clé 2 est libre en rotation autour de l'axe 1. Le bras d'actionnement 2a est entrainé par un électro-aimant (représenté sur la figure 2),pour déplacer en rotation la clé 2. Le secteur angulaire 2b présente un trou oblong circulaire 2e, visible sur la figure 3. Une vis épaulée 5, monté dans le carter, constitue un élément d'arrêt pour le secteur 2b, qui limite la rotation de la clé 2. Elle coopère avec la patte 2d et le ressort 4, pour assurer le rappel en sélection. La vis 5 permet également de bloquer la clé 2 en translation.

En résumé, ce dispositif de commande interne comprend une clé d'inter-verrouillage rotative 2 apte à sélectionner l'une d'au moins deux lignes de vitesses en verrouillant simultanément les lignes non sélectionnées, un axe de commande interne 1 immobilisé en rotation vis-à-vis du carter de la boîte et entraîné en translation axiale sous le contrôle d'un organe externe de commande de passage pour engager des vitesses sur une ligne de vitesse sélectionnée en déplaçant un axe de fourchette vers une position de vitesse engagée.

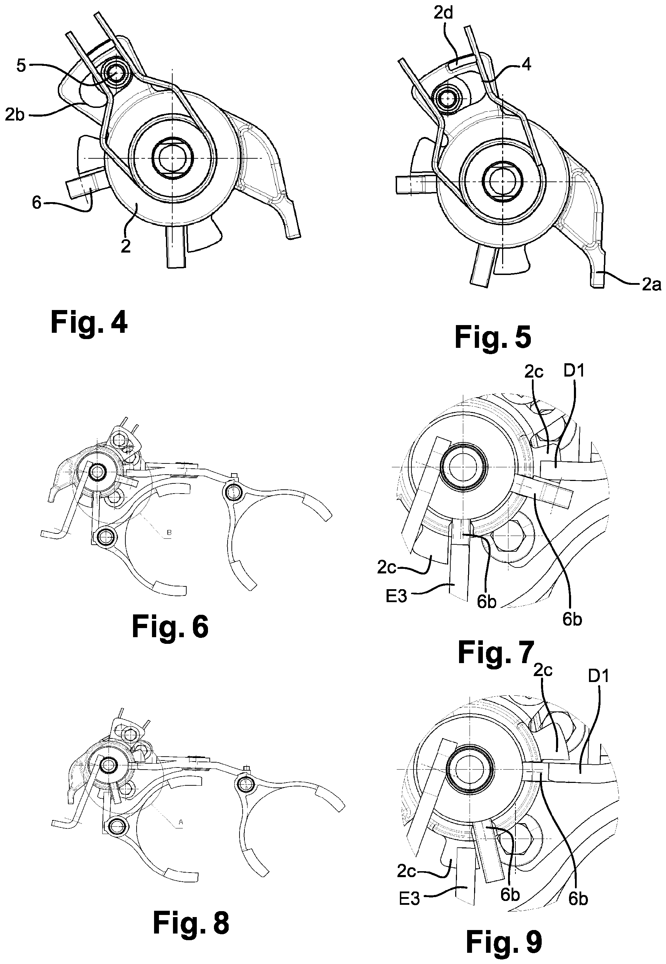

Un chariot de passage rigide 6 est monté autour de l'axe 1 sur des paliers 6a, montés sur des bagues 6e, par exemple de type « PTFE ». Ce chariot porte deux doigts de sélection 6b, dont un seul est visible sur cette figure. Le chariot 6 est entrainé en rotation autour de l'axe de passage par la clé d'inter-verrouillage 2, avec laquelle il est en contact au niveau des doigts (cf. figures 7 et 9). Chaque doigt 6b correspond à une ligne de vitesses à actionner. Le chariot 6 est supporté par l'axe de commande 1. Il est entraîné en translation par cet axe lors de l'engagement d'une vitesse, tout en pouvant coulisser le long de celui-ci. Un ressort 8, enroulé autour de l'axe 1, est comprimé par le déplacement du chariot en emmagasinant de l'énergie sur une première partie de la course d'engagement de l'axe 1. Il libère son énergie pour assister l'engagement de la vitesse, sur une deuxième partie de cette course.

La figure 2 décrit de manière non limitative les principaux organes fonctionnels de la boîte de vitesses coopérant avec le dispositif de commande proposé. L'actionneur de sélection est constitué par exemple par un électro-aimant 11, entraînant le bras 2a en rotation autour de l'axe de passage. L'actionneur de passage, entrainant le crabot 3, peut être constitué par un moteur 12 entrainant un chariot par un système écrou/vis sans fin, ou par tout autre système d'actionnement équivalent. Sur cette figure, on distingue également :
- une ligne d'arbre A et une ligne d'arbre B, chacune équipée d'un ensemble baladeur/clabots ;
- un ensemble C composé d'une fourchette C1, d'un axe C2 et d'un pion C3, actionnant le baladeur de la ligne d'arbre A ;
- un ensemble de basculement D composé d'un bras D1 faisant la liaison entre le pion C3 et un des doigts 2c, d'un axe de basculement D2, et d'un support D3 (de forme non limitative) fixé au carter ;
- un ensemble E composé d'un axe E1, d'une fourchette E2 et d'un crabot E3, actionnant le baladeur de la ligne d'arbre B.

Sur la figure 3, on retrouve la pièce d'arrêt en rotation D3 de l'axe 1, engagée autour du méplat d'extrémité 1a de l'axe 1. Cette pièce, qui apparaît aussi sur la figure 2, est le support basculeur D qui assure le blocage. Toutefois, sans sortir du cadre de l'invention, d'autres types de pièces peuvent aussi assurer le blocage en rotation de l'axe 1. On voit également le secteur 2b de la clé d'inter-verrouillage, et la lumière 2e, limitant le débattement de la clé 2 autour de la vis 5.

Les figures 4 et 5 présentent le principe de rappel en sélection. En position de repos de l'électro-aimant 11 (figure 4), l'ensemble clé d'inter-verrouillage 2 et chariot 6 est en position en face d'une ligne de sélection, grâce au ressort 4, lié à la clé 2 par la patte 2d, et au carter par la vis épaulée 5. Quand l'électro-aimant 11 pousse le bras 2a, l'ensemble clé-chariot 2, 6 est entrainé en rotation autour de l'axe de passage (figure 5), sélectionnant ainsi la ligne de vitesses voulue. Le secteur angulaire 2b assure la fonction de butée grâce à la vis épaulée 5. Le ressort 4, entrainé par la patte 2d, permet à l'ensemble de retrouver sa position initiale lorsque l'électro-aimant n'agit plus. Durant cette phase de fonctionnement, l'axe 1 reste immobile en rotation.

Le chariot 6 porte des doigts de sélection 6b, visibles sur les figures 6 et 7. Ces doigts coopèrent avec la clé d'inter-verrouillage 2. Le chariot est entraîné en rotation autour de l'axe 1 par la clé 2 d'inter-verrouillage 2, lors de la sélection d'une ligne de vitesses. Son déplacement est assuré par la poussée des secteurs 2c de la clé 2, sur les doigts 6b. Ces figures représentent le système de sélection des vitesses dans une première position de sélection. Le doigt 6b inférieur est engagé dans le crabot E3 pour l'entraîner. Le secteur de verrouillage 2c adjacent est dégagé. Dans le même temps, le crabot du basculeur D1 est verrouillé par l'autre secteur angulaire 2c, tandis que le doigt 6b de droite est libre, et ne peut pas engager de vitesse.

Sur les figures 8 et 9, le même système est dans sa deuxième position de sélection : le doigt 6b de droite est disposé pour entrainer le crabot D1, tandis que le secteur de verrouillage 2c adjacent est dégagé. Le crabot E3 est verrouillé par le secteur angulaire 2c du bas, tandis que le doigt 6b adjacent est libre et ne peut pas engager de vitesse.

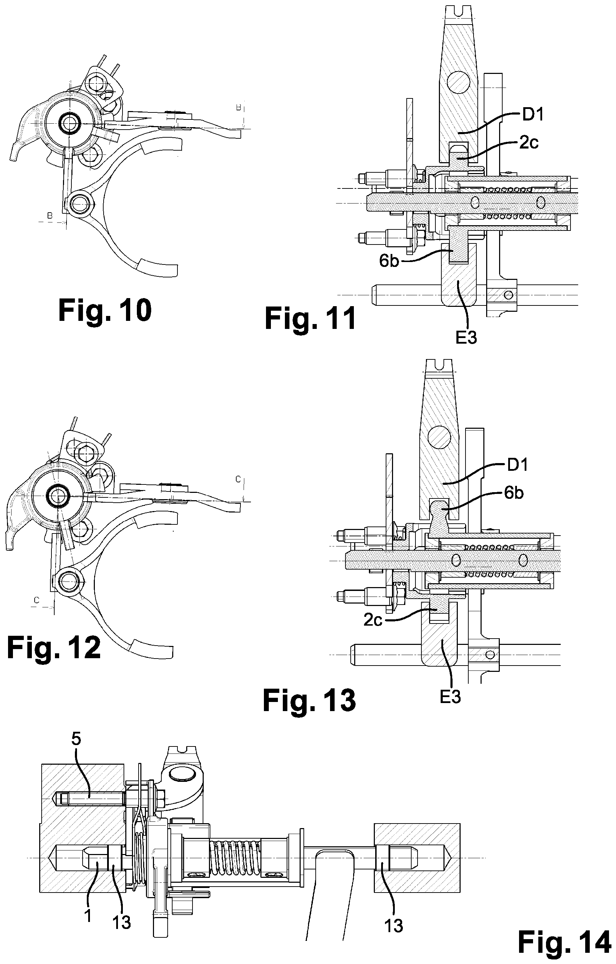

Les figures 10, 11, 12 et 13 présentent le dispositif de commande en vue frontale, et en coupe axiale. La figure 14 montre l'agencement du dispositif vis-à-vis du carter de la boîte, et ses interfaces avec le carter, notamment au niveau de l'axe 1 qui est supporté par deux paliers 13, et de la vis épaulée 5, vissée dans la masse du carter.

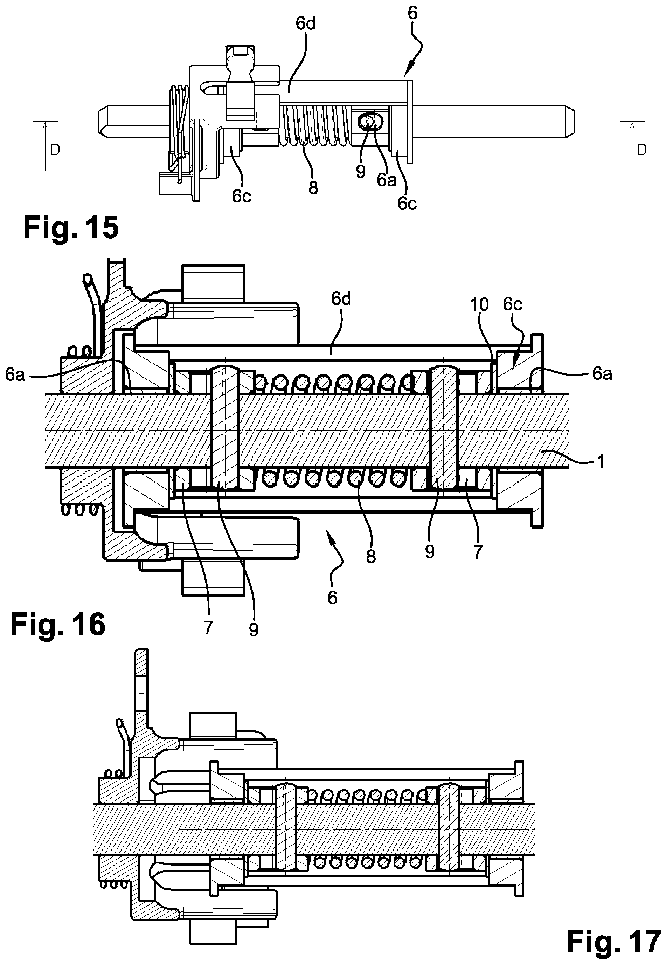

Le chariot 6 constitue un pontet rigide composé de deux paliers d'extrémité 6a engagés autour de l'axe 1 reliés par des montants axiaux rigides 6d, qui autorisent son déplacement axial sur l'axe 1. Une cale de réglage 10 est intercalée entre le dispositif d'aide au passage et le chariot 6. Le ressort 8 est monté entre les deux bagues 7, qui coulissent le long de l'axe sur une distance déterminée pour limiter le débattement axial du chariot. Les bagues 7 sont disposées autour de l'axe 1, à l'intérieur du chariot 6. Le ressort 8, enroulé autour de l'axe 1, prend appui sur les bagues 7. Chaque bague présente une lumière, ou trou oblong 7a, coopérant avec une goupille 9, pour limiter son coulissement sur l'axe 1. Les trous 7a sont découpés dans la matière des bagues. Les goupilles sont fixées sur l'axe (cf. figure 15). Les goupilles traversent 9 les lumières 7a. Lorsque l'axe 1 est déplacé vers une position de rapport engagé, sous le contrôle de l'électro-aimant 12, elles permettent au chariot de coulisser sur l'axe 1, avec un débattement axial limité.

Le fonctionnement de ce système d'aide au passage est illustré par les figures 16 et 17. Le déplacement du chariot 6 s'effectue sous le contrôle de l'électro-aimant 12. L'axe 1, entrainé par le crabot 3, compresse le ressort 8 par l'intermédiaire des bagues 7 et des goupilles 9. Le trou oblong 7a permet au ressort 8 de se comprimer. Lorsque le ressort 8 se détend, l'ensemble 6 est propulsé, en plus d'effectuer une course similaire à celle de l'axe. Une fois l'ensemble 6 actionné en translation, la vitesse préalablement sélectionnée et engagée, dans un sens ou dans l'autre. En position repos, il y a contact entre les goupilles 9 et le trou oblong des bagues. Ce contact est maintenu par le ressort 8. La cale de réglage 10, intercalée entre une des bagues 7 et le chariot 6, permet de contrôler le jeu entre ces deux éléments. En maintenant un faible jeu entre ces deux éléments, il est possible de supprimer des efforts de trainée pouvant résulter du mouvement de sélection, si les bagues 7 sont poussées par le ressort 8 et prennent appui sur le chariot 6 en position repos.

En conclusion, l'invention permet de mettre à profit un axe de commande interne comprenant une clé d'inter-verrouillage, et un dispositif de rappel en sélection, grâce à l'intégration d'un chariot assurant l'assistance de l'ensemble des crabots de fourchettes de la boîte de vitesses.

## Revendications

1. Dispositif de commande interne de boîte de vitesses comprenant un module de sélection qui présente une clé d'inter-verrouillage rotative (2) apte à sélectionner l'une d'au moins deux lignes de vitesses en verrouillant simultanément les lignes non sélectionnées, et un axe de commande interne (1) entraîné en translation axiale sous le contrôle d'un organe externe de commande de passage pour engager des vitesses sur une ligne de vitesses sélectionnée en déplaçant un axe de fourchette vers une position de vitesse engagée, le dispositif comportant un chariot d'aide au passage (6) supporté par l'axe de commande (1), et entraîné en translation lors de l'engagement d'une vitesse tout en pouvant coulisser le long de celui-ci, et un ressort (8) enroulé autour de l'axe (1) qui est comprimé par le déplacement du chariot en emmagasinant de l'énergie sur une première partie de la course d'engagement de l'axe (1), et libère son énergie pour assister l'engagement de la vitesse sur une deuxième partie de cette course, le dispositif étant **caractérisé en ce que**
l'axe de commande interne est immobilisé en rotation vis-à-vis du carter de la boîte et le chariot est entraîné en translation par l'axe de commande interne lors de l'engagement d'une vitesse.

2. Dispositif de commande interne selon la revendication 1, **caractérisé en ce que** le ressort (8) est monté entre deux bagues (7) qui coulissent le long de l'axe sur une distance déterminée pour limiter le débattement axial du chariot (6).

3. Dispositif de commande interne selon la revendication 2, **caractérisé en ce que** les bagues (7) sont disposées autour de l'axe (1) à l'intérieur du chariot (6).

4. Dispositif de commande interne selon la revendication 2 ou 3, **caractérisé en ce que** les bagues (7) présentent un trou oblong (7a) coopérant avec une goupille (9) fixée sur l'axe pour limiter leur coulissement sur l'axe (1).

5. Dispositif de commande interne selon l'une des revendications précédentes, **caractérisé en ce que** le chariot (6) est composé de deux paliers d'extrémité (6a) engagés autour de l'axe (1) et reliés par des montants axiaux rigides (6d).

6. Dispositif de commande interne selon l'une des revendications précédentes, **caractérisé en ce que** le chariot (6) est entraîné en rotation autour de l'axe (1) par la clé d'inter-verrouillage (2), lors de la sélection d'une ligne de vitesses.

7. Dispositif de commande interne selon la revendication 6, **caractérisé en ce que** le chariot (6) porte des doigts de sélection (6b), coopérant avec la clé d'inter-verrouillage (2) lors de la sélection des lignes de vitesses.

8. Dispositif de commande interne selon la revendication 7, **caractérisé en ce que** le chariot est entraîné en rotation par la poussée de secteurs (2c) de la clé d'inter-verrouillage (2), sur les doigts de sélection (2).

## Patentansprüche

1. Interne Getriebe-Steuervorrichtung, umfassend ein Auswahlmodul, das einen drehbaren Zwischenverriegelungsschlüssel (2) aufweist, der geeignet ist, einen von mindestens zwei Getriebegängen auszuwählen und dabei gleichzeitig die nicht ausgewählten Getriebegänge zu verriegeln, und eine innere Steuerachse (1), die unter der Steuerung eines äußeren Steuerorgans zum Wechseln zum Einlegen der Schaltstufen auf einem ausgewählten Getriebegang in axialer Translation angetrieben wird, indem eine Gabelachse in Richtung einer Position einer eingelegten Schaltstufe verschoben wird, wobei die Vorrichtung einen Hilfsschlitten zum Wecheln (6) aufweist, der von der Steuerachse (1) getragen ist und bei dem Einlegen von einer Schaltstufe in Translation angetrieben wird und dabei gleichzeitig entlang dieser gleiten kann, und eine Feder (8) aufweist, die um die Achse (1) gewickelt ist, die durch das Verschieben des Schlittens komprimiert wird und dabei auf einem ersten Teil des Eingriffshubs der Achse (1) Energie speichert und ihre Energie freigibt, um das Einlegen der Schaltstufe auf einem zweiten Teil dieses Hubs zu unterstützen, wobei die Vorrichtung **dadurch gekennzeichnet ist, dass**
die innere Steuerachse gegenüber dem Getriebegehäuse in Drehung immobilisiert ist und der Schlitten beim Einlegen einer Schaltstufe durch die innere Steuerachse in Translation angetrieben wird.

2. Interne Steuervorrichtung nach Anspruch 1, **dadurch gekennzeichnet, dass** die Feder (8) zwischen zwei Ringen (7) befestigt ist, die entlang der Achse über einen vorbestimmten Abstand gleiten, um das axiale Spiel des Schlittens (6) zu begrenzen.

3. Interne Steuervorrichtung nach Anspruch 2, **dadurch gekennzeichnet, dass** die Ringe (7) um die Achse (1) im Inneren des Schlittens (6) angeordnet sind.

4. Interne Steuervorrichtung nach Anspruch 2 oder 3, **dadurch gekennzeichnet, dass** die Ringe (7) ein Langloch (7a) aufweisen, das mit einem Stift (9) zusammenwirkt, der auf der Achse befestigt ist, um ihr Gleiten auf der Achse (1) zu begrenzen.

5. Interne Steuervorrichtung nach einem der vorhergehenden Ansprüche, **dadurch gekennzeichnet, dass** der Schlitten (6) aus zwei Endlagern (6a) besteht, die um die Achse (1) in Eingriff sind und durch starre axiale Stäbe (6d) verbunden sind.

6. Interne Steuervorrichtung nach einem der vorhergehenden Ansprüche, **dadurch gekennzeichnet, dass** der Schlitten (6) bei der Auswahl eines Getriebegangs durch den Zwischenverriegelungsschlüssel (2) in Drehung um die Achse (1) angetrieben wird.

7. Interne Steuervorrichtung nach Anspruch 6, **dadurch gekennzeichnet, dass** der Schlitten (6) Auswahlfinger (6b) trägt, die bei der Auswahl der Getriebegänge mit dem Zwischenverriegelungsschlüssel (2) zusammenwirken.

8. Interne Steuervorrichtung nach Anspruch 7, **dadurch gekennzeichnet, dass** der Schlitten durch das Drücken von Bereichen (2c) des Zwischenverriegelungsschlüssels (2) auf den Auswahlfingern (2) in Drehung angetrieben wird.

## Claims

1. Internal gearbox control device comprising a selection module which has a rotary interlocking key (2) capable of selecting one of at least two gear lines by simultaneously locking the unselected lines, and an internal control axis (1) driven in axial translation under the control of an external shift control member to engage gears on a selected gear line by displacing a fork axis to an engaged gear position, the device comprising a shifting assistance carriage (6) supported by the control axis (1), and driven in translation upon the engagement of a gear while being able to slide along the latter, and a spring (8) wound around the axis (1) which is compressed by the displacement of the carriage storing energy over a first part of the engagement travel of the axis (1), and releases its energy to assist the engagement of the gear over a second part of this travel, the device being **characterized in that**
the internal control axis is immobilized in rotation with respect to the case of the gearbox and the carriage is driven in translation by the internal control axis upon the engagement of a gear.

2. Internal control device according to Claim 1, **characterized in that** the spring (8) is mounted between two rings (7) which slide along the axis over a determined distance to limit the axial travel of the carriage (6).

3. Internal control device according to Claim 2, **characterized in that** the rings (7) are arranged around the axis (1) inside the carriage (6).

4. Internal control device according to Claim 2 or 3, **characterized in that** the rings (7) have an oblong hole (7a) cooperating with a pin (9) fixed to the axis to limit the sliding thereof on the axis (1).

5. Internal control device according to one of the preceding claims, **characterized in that** the carriage (6) is made up of two end bearings (6a) engaged around the axis (1) and linked by rigid axial uprights (6d).

6. Internal control device according to one of the preceding claims, **characterized in that** the carriage (6) is driven in rotation about the axis (1) by the interlocking key (2) upon the selection of a gear line.

7. Internal control device according to Claim 6, **characterized in that** the carriage (6) bears selection fingers (6b), cooperating with the interlocking key (2) upon the selection of the gear lines.

8. Internal control device according to Claim 7, **characterized in that** the carriage is driven in rotation by the thrust of segments (2c) of the interlocking key (2), on the selection fingers (2).
